Europäisches Patentamt

**European Patent Office**

Office européen des brevets

(11) Veröffentlichungsnummer: **0 087 752**
**A1**

(12) **EUROPÄISCHE PATENTANMELDUNG**

(21) Anmeldenummer: **83101769.4**

(22) Anmeldetag: **23.02.83**

(51) Int. Cl.³: **B 60 P 3/12**

(30) Priorität: **25.02.82 DE 3206805**

(43) Veröffentlichungstag der Anmeldung:
**07.09.83 Patentblatt 83/36**

(84) Benannte Vertragsstaaten:
**FR GB IT**

(71) Anmelder: **Sedelmayer, Franz X., jun.**
**Gaissacherstrasse 5**
**D-8000 München 70(DE)**

(72) Erfinder: **Sedelmayer, Franz X., jun.**
**Gaissacherstrasse 5**
**D-8000 München 70(DE)**

(74) Vertreter: **Haft, Berngruber, Czybulka**
**Hans-Sachs-Strasse 5**
**D-8000 München 5(DE)**

(54) **Abschleppfahrzeug.**

(57) Abschleppfahrzeug mit einer Ladefläche für ein abzuschleppendes Kraftfahrzeug, wobei das hintere Ende der
Ladefläche bis auf den Boden verlängerbar bzw. bis zum
Boden absenkbar ist. Um mit solchen Abschleppfahrzeugen
auch Fahrzeuge auf die Ladefläche einfach zu laden, die nicht
in der Längsrichtung des Abschleppfahrzeuges stehen, wird
mit der Erfindung vorgeschlagen, die Ladefläche (8, 9, 35)
des Abschleppfahrzeuges (1) um eine Hochachse (7) des
Fahrzeuges verschwenkbar auszugestalten. Hierzu wird die
Ladefläche z.B. auf einem Drehkranz (3, 36) bzw. einer
Sattelschlepperkupplung gelagert.

Fig.1

EP 0 087 752 A1

Die Erfindung bezieht sich auf ein Abschleppfahrzeug mit kippbarer und mit ihrem hinteren Ende auf den Boden absenkbarer Ladefläche.

Derartige Abschleppfahrzeuge werden entweder als selbsttätig fahrende Transportfahrzeuge oder als an ein Zugfahrzeug anzuhängende Anhänger ausgebildet. In der Hauptsache dienen sie zum Transport von abzuschleppenden Autos, sind jedoch generell auch zum Transport anderer Güter geeignet.

Die einfachste Form derartiger Fahrzeuge ist die, bei dem die nach hinten ragende und meistens in Richtung auf den Boden leicht abgeknickte Ladefläche durch ein Auffahrblech so verlängert wird, daß dessen hinteres Ende auf dem Boden aufsteht. Ein dahinter stehendes Auto kann dann z.B. mit Hilfe eines Seilzuges auf die Ladefläche gezogen werden.

Bei einer Weiterentwicklung dieser Abschleppfahrzeuge wird die gesamte Ladefläche zunächst nach hinten geschoben und anschließend um eine Schwenkachse so gekippt, daß das hintere Ende der Ladefläche auf dem Boden aufliegt. Nach Beladen mit einem abzutransportierenden Kraftfahrzeug z.B. mit Hilfe einer Seilwinde wird die Ladefläche in die horizontale Stellung gekippt und auf dem Fahrzeugrahmen des Transporters nach vorne in die Ausgangslage gezogen.

Schwierigkeiten treten beim Abtransport von Kraftfahrzeugen, z.B. Unfallwagen mit derartigen Abschleppfahrzeugen nur dann auf, wenn die Längsachse des Abschleppfahrzeuges nicht mit der Längsachse des abzutransportierenden Kraftfahrzeuges übereinstimmt, z.B. dann, wenn das in einen Unfall verwickelte

Kraftfahrzeug im Strassengraben oder neben die Strasse ge-. rutscht war. In einem solchen Fall wird das Kraftfahrzeug zunächst an einen Haken des Abschleppfahrzeuges gehängt und so lange aus der Anfangslage gezogen, bis das Auto so ausgerichtet ist, daß das Abschleppfahrzeug direkt vor ihm plaziert werden kann. Anschließend wird dann das Kraftfahrzeug, wie oben geschildert, auf die Ladefläche gezogen. Sollte die erwähnte Ausrichtung des Kraftfahrzeuges jedoch. z.B. aus Platzgründen nicht möglich sein, so ist man in der Regel darauf angewiesen, einen größeren Transportwagen mit einer Hebevorrichtung, so z.B. einen Kranwagen an den Unfallort zu bestellen. Der Aufwand für den Abtransport wird dadurch selbstverständlich vergrößert.

Der Erfindung liegt die Aufgabe zugrunde, herkömmliche einfache Abschleppfahrzeuge so weiter zu entwickeln, daß sie auch bei schwierigeren Ladevorgängen eingesetzt werden können.

Diese Aufgabe ist gemäß der Erfindung dadurch gelöst, daß die Ladefläche des Abschleppfahrzeuges zusätzlich um eine Hochachse des Fahrzeuges verschwenkbar ist. Vorzugsweise ist die Ladefläche bzw. der die Ladefläche tragende Rahmen bzw. Aufbau auf einem mit dem Fahrzeug fest verbundenen Drehkranz abgestützt, der um eine Vertikalachse verdrehbar ist.

Soll mit einem derartigen Abschleppfahrzeug ein Unfallfahrzeug abgeschleppt werden, vor das das Abschleppfahrzeug nicht ohne weiteres gesetzt und anschließend das Unfallfahrzeug auf die Ladefläche gezogen werden kann, so kann jetzt die Ladefläche bzw. der diese tragende Rahmen oder Aufbau in Achsrichtung des Unfallfahrzeuges gedreht werden

- 4 -

bis die Ladefläche in der Richtung steht, in der das Unfallfahrzeug auf die Ladefläche gezogen wird.

Besonders günstig kann die Erfindung bei Abschleppfahrzeugen mit einer kippbaren und ausfahrbaren Ladefläche angewandt werden, bei der die Ladefläche um eine am hinteren Ende des Fahrzeuges liegende Achse schwenkbar und längs Führungen verschiebbar ist. Die Ladefläche wird hier allein durch Verschiebung des Schwerpunktes, d.h. durch Schwerkraftwirkung, gekippt, bis sie mit ihrem hinteren Ende auf dem Boden aufliegt. Zunächst kann dann z.B. die Ladefläche in eine indifferente Stellung gebracht werden, in der der Schwerpunkt etwa über der Kippachse der Ladefläche liegt. Anschließend wird dann die Ladefläche um die Hochachse in Richtung des abzuschleppenden Fahrzeuges gedreht und daraufhin endgültig bis zum Boden abgekippt. Eine solche Ausführung ist deshalb besonders günstig, weil alle Antriebe, Motoren oder Seilwinden für das Kippen der Ladefläche und auch zum Ziehen eines Unfallfahrzeuges auf die Ladefläche direkt an dieser bzw. mit deren Rahmen oder Aufbau verbunden sind, nicht jedoch mit festen Fahrzeugteilen. Auf diese Weise kann die Ladefläche problemlos auch um die Hochachse geschwenkt werden, ohne daß Verbindungen zwischen Ladefläche und etwa dem starren Fahrzeugrahmen stören würden. Selbstverständlich muß das Abschleppfahrzeug so konstruiert sein, daß beim Drehen der Ladefläche um die Hochachse und anschließenden Abkippen keine Teile des Fahrzeuges, so Rahmenteile usw. berührt werden. Aus diesem Grunde wird die Schwenkachse hinter die Hinterachse des Fahrzeuges, z.B. auf dem darüber befindlichen, nach hinten ragenden Fahrzeugrahmenteile gelegt. In diesem Bereich ist ein Abkippen der Ladefläche nach hinten, eventuell nach anfänglicher Verschiebung nach hinten, ohne weiteres möglich.

Die Erfindung wird in der nachfolgenden Beschreibung anhand der Zeichnung näher erläutert. In der Zeichnung stellen dar:

Figur 1       eine Seitenansicht eines selbstfahrenden Abschleppfahrzeuges mit einer kippbaren, ausfahrbaren sowie um eine Hochachse schwenkbaren Ladefläche;

Figur 2       eine Aufsicht auf das Abschleppfahrzeug bei auf dem Boden abgelassener Ladefläche in einer bestimmten Drehstellung;

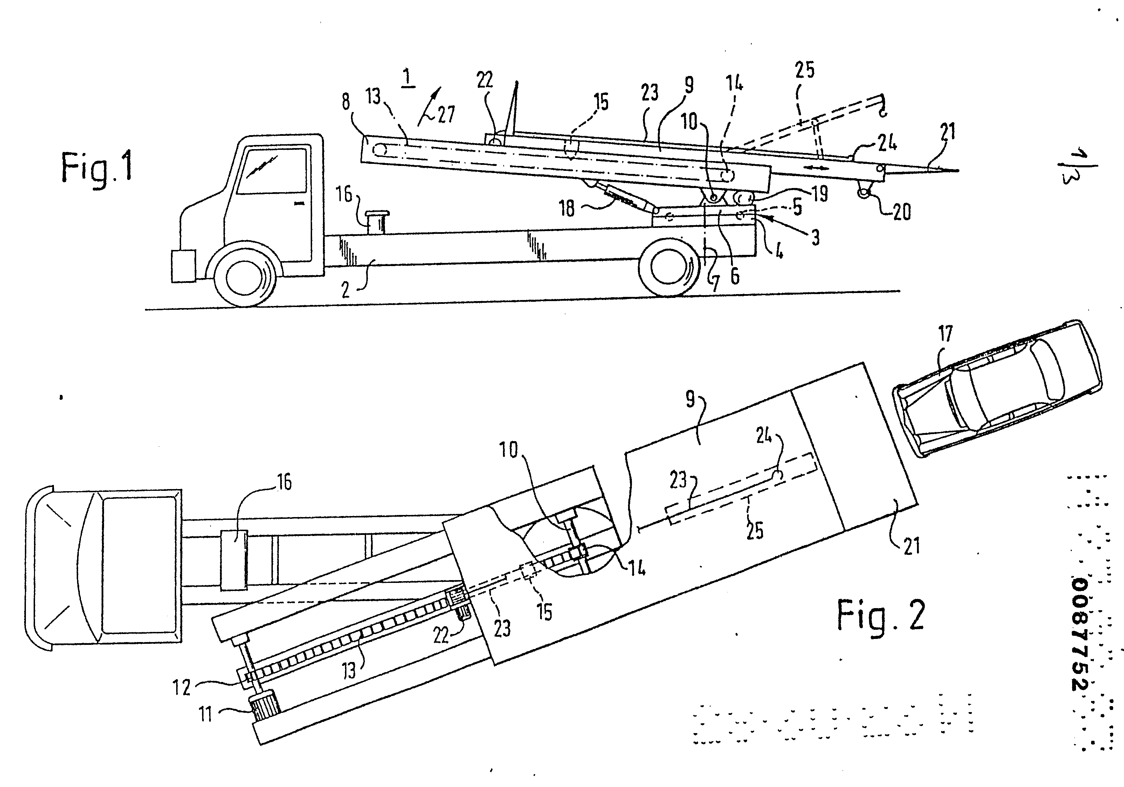

Figuren
3 und 4       eine Seitenansicht und eine Aufsicht eines selbstfahrenden Abschleppfahrzeuges ähnlich dem in den Figuren 1 und 2 mit einer hydraulisch betätigten Ladefläche;

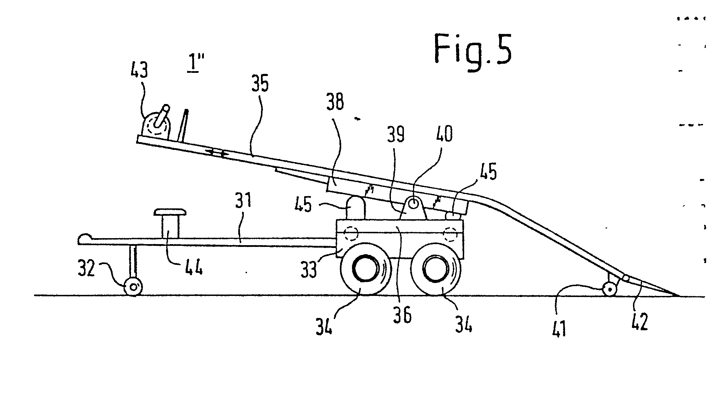

Figur 5       ein als Hänger ausgebildetes Abschleppfahrzeug mit einer durch Schwerpunktverschiebung kippbaren und um eine Hochachse drehbaren Ladefläche gemäß der Erfindung.

In Figur 1 ist ein selbstfahrendes Abschleppfahrzeug 1 dargestellt, auf dessen Fahrzeugrahmen 2 am hinteren Ende ein Lenkkranz 3 gelagert ist, der aus einer mit dem Fahrzeugrahmen fest verbundenen unteren Lagerschale 4 und einer auf dieser hier nur angedeuteten Kugel- bzw. Wälzlagern 5 abgestützten oberen Lagerschale 6 besteht. Die obere Lagerschale ist um die hier nur angedeutete Mittelachse 7, demnach eine Hochachse des Fahrzeuges, drehbar. Auf der oberen Lagerschale 5 des Lenkkranzes ist ein Rahmen 8 für eine verschiebbare Ladefläche 9 um eine horizontale Schwenkachse 10 schwenkbar abgestützt. Die Schwenkachse 10 liegt in diesem Falle hinter der Hochachse 7 des Lenkkranzes, jedoch sind auch andere Lagen möglich, so lange der Rahmen 8 mit der ausfahrbaren Ladefläche ungehindert um die Schwenkachse 10 gekippt und zu Boden abgelassen werden kann, wie das im nachfolgenden erläutert wird.

Die Ladefläche 9 ist in Richtung des Doppelpfeiles in dem Rahmen mit Hilfe von hier nicht dargestellten Kugellagern verschiebbar geführt. Am vorderen Ende des Rahmens 8 ist ein Elektromotor 11 vorgesehen, der über ein Getriebe und eine Kupplung ein Zahnrad 12 antreibt, über das eine endlose Kette 13 läuft. Diese Kette verläuft in der Mittellängsachse des Rahmens und wird an dessen hinteren Ende um ein weiteres Zahnrad 14 geführt. Dieses Zahnrad liegt etwa oberhalb der Schwenkachse 10. Eine gewisse Distanz von dem vorderen Ende der verschiebbaren Ladefläche 9 entfernt greift ein mit dieser verbundener Befestigungshaken 15 in die endlose Kette ein, so daß beim Einschalten des Elektromotores 11 je nach dessen Drehrichtung die Ladefläche entweder ausgefahren oder eingefahren wird.

Beim Fahrbetrieb des Abschleppfahrzeuges ruht das vordere Ende des Rahmens 8 auf einem Stützbock 16 und kann hier verriegelt werden. Die Ladefläche 9 ist vollständig in den Rahmen eingefahren. Soll ein Fahrzeug, z.B. ein Unfallfahr- zeug abgeschleppt und hierzu auf die Ladefläche heraufgezogen werden, wie dieses in Figur 2 angedeutet ist, so wird zunächst durch Einschalten des Elektromotores 11 die Ladefläche 9 so weit nach hinten herausgefahren, daß der Schwerpunkt des gesamten Aufbaus aus Rahmen und Ladefläche sich etwa oberhalb der Schwenkachse 10 befindet. Das gesamte Gewicht des Aufbaus ruht nun auf dem Lenkkranz. Der gesamte Aufbau kann dann ohne Schwierigkeiten von Hand um die Hochachse 7 des Lenkkranzes 3 so weit verdreht werden, bis die Längsachse des abzuschleppenden Fahrzeuges 17 etwa in Richtung der Längsachse der Ladefläche ausgerichtet ist, wie dieses in Figur 2 dargestellt ist. Anschließend wird der Elektromotor 11 erneut gestartet, um die Ladefläche 9 weiter nach hinten auszufahren. Der Schwerpunkt des gesamten Aufbaus aus Rahmen und Ladefläche verschiebt sich jetzt nach hinten über die Schwenkachse 10 hinaus, so daß Rahmen und Ladefläche um die Schwenkachse 10 in Richtung des Pfeiles 27 nach hinten kippen. Dieser Kippvorgang wird durch geeignete Bremsmittel, so z.B. den hier angedeuteten hydraulischen Stoßdämpfer 18 oder auf dem Lenkkranz 3 angeordnete Luftpolster 19 gedämpft. Die Ladefläche 9 wird weiter ausgefahren, bis ein an ihrem hinteren Ende vorgesehenes Stützrad 20 schließlich den Boden berührt. Auch jetzt ist ein weiteres Ausfahren der Ladefläche noch möglich, da diese auf diesem Stützrad bzw. Stützrädern 20 läuft. Mit dem hinteren Ende der Ladefläche 9 wird noch eine Auffahrrampe 21 verbunden, die dann direkt vor dem abzuschleppenden Kraftfahrzeug 17 endet.

Am vorderen Ende der Ladefläche 9 ist eine Seilwinde 22 angeordnet, deren Seil 23 vorne mit einem Haken 24 versehen ist. Dieser Haken wird an dem abzuschleppenden Fahrzeug befestigt , und anschließend wird die Seilwinde 22 eingeschaltet. Hierdurch wird das Fahrzeug 17 auf die Ladefläche 9 heraufgezogen. Die Ladefläche wird anschließend durch Einschalten des Elektromotors 11 wieder eingefahren. Hierdurch verschiebt sich erneut der Schwerpunkt des Aufbaus aus Rahmen, Ladefläche und abzuschleppendem Fahrzeug langsam nach vorne, bis er in die Nähe der Schwenkachse 10 gelangt. Ab jetzt beginnt der Aufbau aus Rahmen, Ladefläche und abzuschleppendem Fahrzeug um die Schwenkachse 10 zu kippen, wobei sich das vordere Ende des Rahmens 8 in Richtung auf den Stützbock bewegt. Ist etwa die horizontale Lage erreicht, wird der Elektromotor 11 ausgeschaltet und der Rahmen um die Hochachse 7 des Lenkkranzes 3 in die Längsrichtung des Abschleppfahrzeuges gedreht. Daraufhin wird die Ladefläche 9 vollständig in den Rahmen 8 eingezogen, der Rahmen auf dem Stützbock 16 verriegelt und das Kraftfahrzeug auf der Ladefläche endgültig gesichert. Das Abschleppfahrzeug ist dann zur Fahrt bereit.

In die Ladefläche 9 kann noch ein Ladekran 25 integriert werden, was in den Figuren 1 und 2 gestrichelt dargestellt ist. Dadurch , daß die Ladefläche 9 am Boden abgestützt ist, kann der Lastangriffspunkt des Krans auch wesentlich weiter außerhalb der Fahrzeuglängsachse liegen als bisher, ohne daß befürchtet werden muß, daß beim Verschwenken des Krans das Abschleppfahrzeug nicht mehr stabil am Boden bleibt. Außerdem kann z.B. der Rahmen 8 mit der Ladefläche und dem beladenen Fahrzeug leichter mit Hilfe einer Seilwinde verschwenkt werden, deren Seilende an dem Stützbock 16 befestigt ist und deren Seiltrommel neben dem Elektromotor 11 montiert ist und von diesem angetrieben wird.

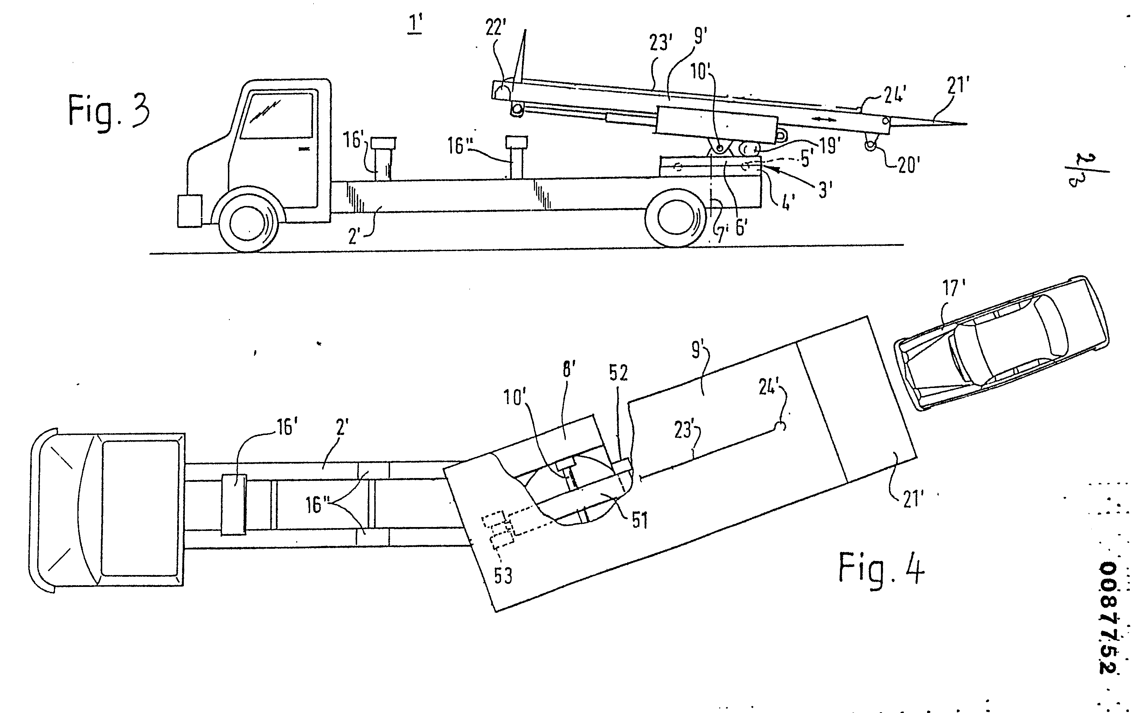

In den Figuren 3 und 4 ist ein Abschleppfahrzeug 1' dargestellt, das dem in den Figuren 1 und 2 dargestellten Fahrzeug ähnelt. Das Fahrzeug weist einen Fahrzeugrahmen 2' auf, an dessen hinteren Ende ein Drehkranz 3' gelagert ist. Der Drehkranz weist eine untere Lagerschale 4', Lager 5' und eine obere Lagerschale 6' auf. Die obere Lagerschale ist um eine vertikale Drehachse 7' drehbar. Auf der oberen Lagerschale 5' ist ein verkürzter Rahmen 8' für eine verschiebbare Ladefläche 9' um eine horizontale Schwenkachse 10' schwenkbar abgestützt. Die Schwenkachse 10' liegt wiederum hinter der Drehachse 7' des Drehkranzes.

Die Ladefläche 9' ist in Richtung des Doppelpfeiles in dem Rahmen 8' mit Hilfe eines mehrfach ausfahrbaren Hydraulikzylinders 51 verschiebbar. Der Hydraulikzylinder ist einmal an der hinteren Kante des Rahmens 8' in einem horizontalen Schwenklager 52 gelagert, die Kolbenstange ist ebenfalls in einem Schwenklager 53 am vorderen Ende der Ladefläche 9' eingespannt.

Diese Konstruktion hat den Vorteil, daß die Gesamtbreite des Abschleppfahrzeuges auch bei ausgeschwenkter Ladefläche 9' nicht so stark steigt, wie bei dem Abschleppfahrzeug gemäß den Figuren 1 und 2 , was aus Figur 4 besonders deutlich wird. Die Funktion dieses Abschleppfahrzeuges und dessen sonstige Ausrüstung sind gleich wie bei dem oben beschriebenen Abschleppfahrzeug. Zusätzlich zu dem einen Stützbock 16' kann für die Ladefläche 9' noch ein weiterer Stützbock 16" vorgesehen werden; ebenso sind Luftpolster 19' zur Dämpfung der Schwenkbewegung möglich. Die Ladefläche selbst weist am hinteren Ende wiederum ein Stützrad 20' und eine Auffahrrampe 21' auf, über die das Kraftfahrzeug 17' mit Hilfe des Seilzuges 23', 24' einer hier nicht näher dargestellten Seilwinde 22' auf die Ladefläche gezogen werden kann.

Anstatt die Ladefläche 9' mit einem Hydraulikzylinder zu verschieben, kann auch ein Kettenantrieb wie beim ersten Abschleppfahrzeug verwendet werden. In diesem Falle wird die Endloskette mit dem Antrieb in der Ladefläche aufgenommen, während der feste Mitnehmer an dem Rahmen befestigt ist.

In Figur ist ein Abschleppfahrzeug 1' in Form eines Hängers dargestellt. Dieser weist eine an einem Zugfahrzeug anzuhängende Deichsel 31 auf, die an ihrem vorderen Ende mit Hilfe eines Stützrades 32 abzustützen ist. Die Deichsel 31 ist mit dem Rahmen 33 eines Radpaares 34 verbunden. Auf diesem Radrahmen 33 ist eine Ladefläche 35 wiederum auf einem Dreh- bzw. Lenkkranz 36 um eine Hochachse schwenkbar gelagert.

Bei derartigen Abschlepphängern wird das Gewicht des Hängers und des damit transportierten Fahrzeuges annähernd gleichmäßig von den Rädern des Radpaares aufgenommen. Der Schwerpunkt von Hänger und beladenem Fahrzeug liegt hierbei ein wenig vor der Mitte des Fahrzeuges, in der Regel etwa in einem Abstand von 10 bis 15 cm. Der Abstand ist deswegen gering, um die zulässige Stützlast am vorderen Deichselende klein zu halten, die in der Regel auf 60 bis 100 kg begrenzt ist. Um, wie bei dem obigen Beispiel, die Ladefläche um eine horizontale Achse zu verschwenken, braucht daher der Schwerpunkt der Ladefläche mit dem Kraftfahrzeug nur geringfügig, etwa um 15 bis 25 cm nach hinten geschoben werden, wodurch der Schwerpunkt hinter die Schwenkachse gelangt und die Ladefläche mit ihrem hinteren Ende sich gegen den Boden neigt.

Zu diesem Zweck ist mit dem oberen Drehteil des Lenkkranzes 36 ein kurzer Rahmen 38 verbunden, der in Stützlagern 39 um eine horizontale Achse 40 auf dem Drehkranz verschwenkbar ist. Der Rahmen 38 hat eine Länge etwa entsprechend dem Durchmesser des Lenkkranzes 36. In diesem Rahmen ist dann die eigentliche Ladefläche 35 entsprechend dem Doppelpfeil längsverschieblich gelagert. Die Mechanik, um die Ladefläche 35 zu verschieben, ähnelt der zu dem obigen Ausführungsbeispiel beschriebenen Mechanik mit einem Kettentrieb. Andere Mechaniken sind selbstverständlich möglich. Aufgrund der kurzen Verschiebewege wird z.B. eine einfache Verschiebehydraulik denkbar. Wird durch die Verschiebemechanik die Ladefläche 35 geringfügig nach hinten verschoben, so beginnt die Ladefläche um die horizontale Achse 40 mit dem hinteren Ende nach unten abzukippen, sobald der Schwerpunkt über diese horizontale Achse 40 hinaus gelangt. Wenn sich der Schwerpunkt etwa in der Gegend der Schwenkachse 40 befindet, kann , wie beim obigen Ausführungsbeispiel, die Ladefläche 35 um die Hochachse verschwenkt werden. Nach weiterem Ausfahren der Ladefläche berühren dann schließlich Stützräder 41 am hinteren Ende der Ladefläche den Boden, wonach eine dort angebracht schwenkbare Auffahrrampe 42 auf den Boden abgeschwenkt wird. Ein abzuschleppendes Fahrzeug kann dann mit Hilfe einer am vorderen Ende der Ladefläche angebrachten Seilwinde 43 auf die Ladefläche 35 gezogen werden. Anschließend wird die Ladefläche 35 in dem Rahmen 38 nach vorne verschoben, so daß sie insgesamt wieder nach vorne schwenkt und in der Endstellung auf einem Stützbock 44 aufliegt und dort verriegelt wird. Der Hänger ist nach anschließender Sicherung des Fahrzeuges fahrbereit. Um die Schwenkbewegungen der Ladefläche zu dämpfen und abzufedern, sind zwischen dem Ringkranz 36 und dem Rahmen 38 Feder-Dämpfungselemente 45 vorgesehen. Dies können wiederum Luftkissen oder geschäumte Kunststoff-Federblöcke sein. Auch Hydraulikzylinder, die zwischen dem Lenkkranz und Aufbauten der Plattform befestigt sind, können verwendet werden.

In den drei obigen Ausführungsbeispielen sind für die Verschwenkung der Ladefläche um eine Hochachse lediglich Dreh- bzw. Lenkkränze erwähnt worden. Selbstverständlich sind hier andere übliche Konstruktionen, so z.B. in Art einer Sattelschlepperkupplung denkbar. Mit solchen Konstruktionen muß nur sichergestellt werden, daß die Ladefläche insgesamt um eine Hochachse verschwenkt werden kann und außerdem um eine horizontale Schwenkachse auf der Schwenkmechanik abgestützt werden kann.

Ein besonderer Vorteil der Erfindung liegt auch darin, daß die horizontale Schwenkachse für die Ladefläche und die vertikale Drehachse des Drehkranzes nahe beieinander liegen. Gesonderte Abstützungen der Ladeflächen werden hiedurch in allen Drehstellungen überflüssig.

P a t e n t a n s p r ü c h e

1. Abschleppfahrzeug mit einer Ladefläche für ein abzuschleppendes Kraftfahrzeug, dadurch gekennzeichnet,
daß die Ladefläche in einem Rahmen
in Längsrichtung verschiebbar gelagert ist, daß Einrichtungen zum Verschieben der Ladefläche in dem Rahmen
vorgesehen sind, daß der Rahmen auf einem mit dem Abschleppfahrzeug verbundenen Stützrahmen um eine horizontale Achse schwenkbar gelagert ist, und daß dieser
Stützrahmen um eine vertikale Achse drehbar ist.

2. Abschleppfahrzeug nach Anspruch 1, dadurch gekennzeichnet,
daß der Stützrahmen ein mit dem Fahrzeugrahmen verbundener
Drehkranz ist.

3. Abschleppfahrzeug nach Anspruch 1, dadurch gekennzeichnet,
daß die vertikale Drehachse des Stützrahmens im Bereich
der stützenden Fahrzeugräder des Abschleppfahrzeuges liegt.

4. Abschleppfahrzeug nach Anspruch 1, dadurch gekennzeichnet,
daß das Abschleppfahrzeug ein Kraftfahrzeug mit einer
Vorder- und einer Hinterachse ist, und daß die vertikale
Drehachse des Stützrahmens im Bereich der Hinterachse,
insbesondere hinter der Hinterachse angeordnet ist.

5. Abschleppfahrzeug nach Anspruch 1, dadurch gekennzeichnet,
daß die Einrichtungen zum Verschieben der Ladefläche
in dem Rahmen einen Kettenantrieb mit einer in dem
Rahmen bzw. in der Ladefläche in Längsrichtung aufgenommenen Endloskette mit einem Antrieb sowie einem
an dem Rahmen bzw. der Ladefläche angeordneten, in die
Endloskette eingreifenden Mitnehmer aufweisen.

6. Abschleppfahrzeug nach Anspruch 1, dadurch gekennzeichnet, daß die Einrichtungen
   zum Verschieben der Ladefläche in dem Rahmen einen
   zwischen Rahmen und Ladefläche eingespannten Hydraulikzylinder aufweisen.

7. Abschleppfahrzeug nach Anspruch 1, dadurch gekennzeichnet, daß die Ladefläche so weit verschoben wird,
   bis der Schwerpunkt der Ladefläche und einem eventuell
   darauf gelagerten Kraftfahrzeug etwa im Bereich der
   vertikalen Drehachse des Stützrahmens liegt, und daß
   erst anschließend der Stützrahmen um die vertikale Drehachse gedreht wird.

8. Abschleppfahrzeug nach Anspruch 1, dadurch gekenn -
   zeichnet, daß zur Dämpfung der Schwenkbewegung des
   Rahmens um die horizontale Achse zwischen Stützrahmen
   und Rahmen Feder/Dämpfungselemente vorgesehen sind.

Fig.1

1/3

Fig. 2

0087752

Fig. 3

Fig. 4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| P,X | DE-U-8 205 254  (SEDELMAYER)  * Ansprüche 1-8; Figuren 1, 2 * | 1-5,7, 8 | B 60 P  3/12 |
| Y,A | US-A-3 715 042  (RELLINGER)  * Spalte 2, Zeilen 18-24; Figuren 1-4 * | 1-4 | |
| Y,A | FR-A-1 328 206  (CARGON)  * Figuren 1-3, 6, 7 * | 1,6 | |
| A | DE-U-7 309 579  (HUBER) | | |
| A | DE-A-2 212 615  (LEBEN & CO.) | | |
| A | US-A-3 311 245  (GALEY) | | RECHERCHIERTE SACHGEBIETE (Int. Cl. 3) |
| A | US-A-3 417 890  (YAMAZAKI) | | B 60 P  3/00 |

Der vorliegende Recherchenbericht wurde für alle Patentansprüche erstellt.

| Recherchenort BERLIN | Abschlußdatum der Recherche 16-05-1983 | Prüfer LUDWIG H J |
|---|---|---|